# EUROPÄISCHE PATENTSCHRIFT

(11) **EP 2 473 790 B1**
(45) Veröffentlichungstag und Bekanntmachung des Hinweises auf die Patenterteilung: **15.04.2015**
(21) Anmeldenummer: 10745624.6
(22) Anmeldetag: 23.08.2010
(51) Int. Cl.: F24F 12/00, E06B 7/02, E06B 7/10

(54) **VORRICHTUNG ZUR GEBÄUDEBELÜFTUNG**
DEVICE FOR BUILDING VENTILATION
DISPOSITIF D'AÉRATION DE BÂTIMENT

(30) Priorität: 04.09.2009 DE 102009040107
(43) Veröffentlichungstag der Anmeldung: 11.07.2012
(60) Teilanmeldung: 15156529.8
(73) Patentinhaber: Ulrich Stieler Kunststoffservice E.K., 38640 Goslar (DE)
(72) Erfinder: ULRICH, Stieler, 38640 Goslar (DE)
(74) Vertreter: Ahrens, Gabriele
(86) Internationale Anmeldenummer: PCT/EP2010/062239
(87) Internationale Veröffentlichungsnummer: WO 2011/026753

(56) Entgegenhaltungen:
- DE-A1- 3 219 450
- DE-A1-102005 008 565
- FR-A1- 2 424 994
- JP-A- 60 259 848

## Beschreibung

Die vorliegende Erfindung betrifft eine Vorrichtung zur Gebäudebelüftung mit Wärmerückgewinnung. Insbesondere betrifft die vorliegende Erfindung eine derartige Vorrichtung zur Gebäudebelüftung mit der die Wärme der Raumluft, die nach Außen geführt wird, zurückgewonnen und mit der zurückgewonnenen Wärme kalte Außenluft, die nach Innen geführt werden soll, vorerwärmt werden kann.

Eine regelmäßige Raumbelüftung ist unerlässlich, da eine schlechte Belüftung gravierende Folgen haben kann. Eine ungenügende Belüftung führt nicht nur zu einem schlechten Wohnklima, sondern verhindert auch einen Ausgleich des Feuchtigkeitsgehalts der Raumluft, der zu einem Muffgeruch und im schlimmsten Fall zur Schimmelbildung führen kann.

Andererseits führt gute Belüftung insbesondere in der kalten Jahreszeit zu einem erheblichen Wärme- und damit Energieverlust.

Einerseits wird warme Raumluft nach Außen geleitet und andererseits muss kalte Außenluft auf die gewünschte Raumwärme erwärmt werden.

Die Belüftung von Räumen oder Gebäuden erfolgt üblicherweise durch aktives Belüften, wobei Fenster oder Türen angekippt oder geöffnet werden. Diese Art der Belüftung erhöht jedoch das Einbruchsrisiko.

Bekannt sind lüftungs- und klimatechnische Anlagen, die bei Gebäuden eingesetzt werden, und die als Wärmerückgewinnungssystem ausgeführt sind, wobei die Wärme der verbrauchten Abluft über ein Wärmetauschersystem entzogen wird und bei Bedarf auf die zu erwärmende Außenluft übertragen wird. Diese Wärmerückgewinnungssysteme können als Kreislaufverbundsysteme ausgeführt sein, wobei sich ein Wärmeaustauscher in der Abluft zur Aufnahme der Wärme aus der verbrauchten Abluft und ein Wärmeaustauscher in der Außenluft, zur Abgabe der aus der Abluft zurückgewonnenen Wärme befindet. Eine Weiterbildung dieser bekannten lüftungs- und klimatechnischen Anlagen ist Gegenstand von DE 10 2005 008 565 A1 die zusätzlich zur Diese bekannten Anlagen sind üblicherweise in einer Aussparung des Mauerwerks eingesetzt oder als Vorschalt- beziehungsweise Anbaugeräte ausgebildet und mit dem Gebäudeinneren verbunden.

Erfindungsgemäß wird ein Belüftungssystem vorgeschlagen, dass eine effiziente Belüftung von Räumen oder Gebäuden ermöglicht, ohne dass Fenster oder Türen gekippt oder geöffnet werden müssen.

Ferner ermöglicht das erfindungsgemäße Belüftungssystem eine Rückgewinnung der Wärme der Raumluft, die nach Außen geführt wird, wobei die rückgewonnene Wärme gleichzeitig zur Vorerwärmung der kalten Außenluft eingesetzt werden kann, die von Außen in den Raum oder das Gebäude eingeleitet wird.

DE 32 19 450 A1 beschreibt ein Wärmepumpen-Einbauteil, das in Gebäudeöffnungen wie Türen oder Fenster eingebaut werden kann, um insbesondere die über die Tür- bzw. Fensterflächen entweichende Wärmeenergie ausnutzen zu können. Beispielsweise sind bei einem Fenster wenigstens zwei Scheiben voneinander in einem Abstand angeordnet, so dass zwischen diesen Scheiben ein Hohlraum gebildet ist, durch den Zuluft durch nach Außen weisende Öffnungen im unteren Rahmen in dem Hohlraum nach oben strömt und die aus dem Raum austretende Wärmeenergie aufnimmt. Die dadurch in der Zuluft enthaltende Wärmeenergie wird auf einen Verdampfer im oberen Rahmen übertragen, von einem Verdichter auf ein höheres Niveau gebracht und von einem Kondensator in den Innenraum abgegeben, wobei ein Querlüfter sowohl die Luft durch den Verdampfer ansaugt als auch durch den Kondensator in den Innenraum drückt. Gemäß einem Ausführungsbeispiel ist vorgesehen, dass auch der Abluft Wärme durch einem Verdampfer entzogen wird, der im Kältemittelkreislauf des Wärmesatzes liegt.

Nach DE 32 19 450 A1 sind zahlreiche Bauteile wie Verdichter und Querlüfter erforderlich. Ein weiterer Nachteil ist, dass die Luft zwischen einen Hohlraum zwischen den Fensterscheiben verläuft, wodurch die Isolationswirkung verringert ist.

Es war daher Aufgabe der vorliegenden Erfindung, eine effizientere Belüftung von Räumen oder Gebäuden zu ermöglichen, die insbesondere auch für Fenster einsetzbar ist, die einen hohen Wärmeisolationsgrad aufweisen.

Erfindungsgemäß wird daher ein Belüftungssystem für Räume oder Gebäude vorgesehen, wobei das Belüftungssystem in ein Gebäudeelement integrierbar ist und das Belüftungssystem ein Wärmeaustauscherelement aufweist, das einen ersten Bereich mit einem ersten Wärmeaustauscher und einen zweiten Bereich mit einem zweiten Wärmeaustauscher aufweist, und der erste und zweite Wärmeaustauscher über Rohrleitungen unter Ausbildung eines Wärmeaustauscherkreislaufes miteinander verbunden sind, wobei im ersten Bereich innere Entlüftungsöffnungen, die den ersten Bereich mit dem Rauminneren verbinden, und äußere Entlüftungsöffnungen, die den ersten Bereich mit der Außenumgebung verbinden, vorgesehen sind, wobei die inneren Entlüftungsöffnungen stromaufwärts zur Fließrichtung eines Wärmeübertragungsmediums in dem Wärmeaustauscherelement zu den äußeren Entlüftungsöffnungen angeordnet sind, und wobei im zweiten Bereich innere Belüftungsöffnungen, die den zweiten Bereich mit dem Rauminneren verbinden, und äußere Belüftungsöffnungen, die den zweiten Bereich mit der Außenumgebung verbinden, vorgesehen sind, wobei die inneren Belüftungsöffnungen stromabwärts zu Fließrichtung des Wärmeübertragungsmedium zu den äußeren Belüftungsöffnungen angeordnet sind, wobei zumindest zwischen der ersten inneren Entlüftungsöffnung und der letzten äußeren Entlüftungsöffnung und zwischen der ersten inneren Belüftungsöffnung und der letzten äußeren Belüftungsöffnung jeweils einen Hohlraum in dem Gebäudeelement vorgesehen ist, der einen Luftstrom ermöglicht.

Der vorliegenden Erfindung liegt die Aufgabe zugrunde, eine Vorrichtung zur Gebäudebelüftung mit Wärmerückgewinnung bereitzustellen, die integraler Bestandteil eines Gebäudeelements, wie zum Beispiel eines Fensters oder einer Tür ist. Und die somit zusammen mit diesem Gebäudeelement ohne Weiteres montiert werden kann.

Der erste Wärmeaustauscher, und der zweite Wärmeaustauscher sind über Rohrleitungen unter Ausbildung eines Wärmeaustauscherkreislaufes miteinander verbunden.

Der erste und zweite Wärmeaustauscher sowie die Rohrleitungen sind dabei in entsprechenden Hohlräumen des Gebäudeelements untergebracht und bilden in dem Gebäudeelement einen Kreislauf aus.

Ist das Gebäudeelement senkrecht oder schräg in dem Gebäude eingebracht, befindet sich vorzugsweise der erste Bereich in einem oberen Teil und der zweite Bereich in einem unteren Teil des Gebäudeelements.

Nachstehend wird die vorliegende Erfindung unter Verweis auf die anliegende Figur, die schematisch eine Ausführungsform der vorliegenden Erfindung zeigt, näher erläutert werden.

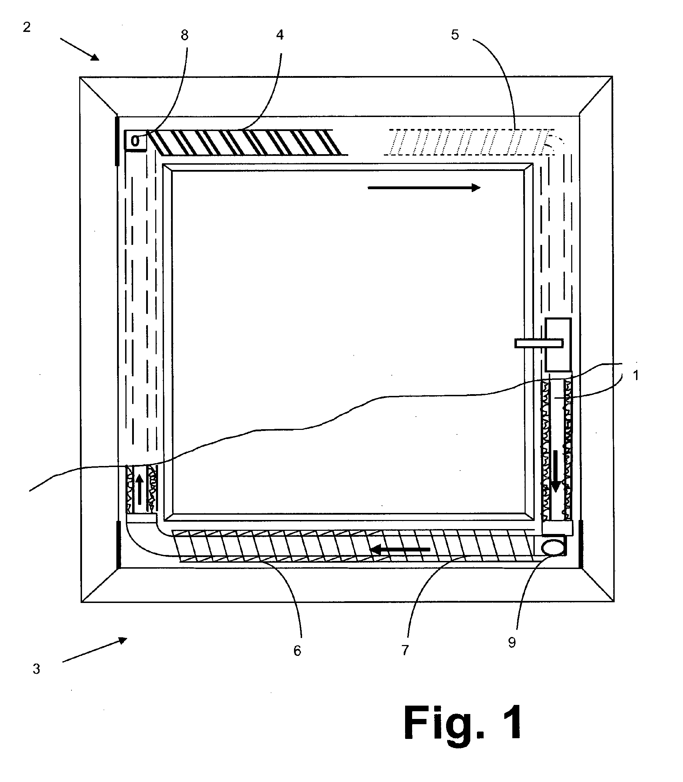

In der in der Figur gezeigten Ausführungsform ist das erfindungsgemäße Belüftungssystem in einem Fensterflügel untergebracht.

Die Figur zeigt den Fensterflügel von Innen aus, das heißt von einem Zimmer aus, gesehen und stellt damit die Innenansicht dar. Ein Fensterflügel hat einen umlaufenden Rand und darin eingesetzt eine Scheibe. Der umlaufende Rand ist in modernen Fenstern typischerweise aus Hohlprofilen gebildet.

In dem Rand des Fensterrahmen ist ein Wärmeaustauscherelement 1 integriert, das um den gesamten Umfang des Randes verläuft und einen geschlossenen Wärmeaustauscherkreislauf bildet. Das Wärmeaustauscherelement 1 ist hohl und mit einem Wärmeübertragungsmedium befüllt. Die Strömungsrichtung des Wärmeübertragungsmediums ist hier im Uhrzeigersinn und durch die Pfeile im Inneren des Wärmetaustauscherelements 1 angedeutet.

Das Wärmeaustauscherelement 1 weist einen im oberen Randteil angeordneten ersten Bereich 2 für die Entlüftung und einen im unteren Randteil angeordneten zweiten Bereich 3 für die Belüftung des Raumes oder Gebäudes auf.

Der erste Bereich 2 weist einen ersten Wärmeaustauscher und der zweite Bereich 3 einen zweiten Wärmeaustauscher auf, die über seitliche verlaufende Rohrleitungen verbunden sind.

Das erfindungsgemäße Belüftungssystem kann prinzipiell in einem beliebigen Gebäudeelement installiert werden. Beispiele sind neben dem in der Figur gezeigten Fensterflügel Fensterrahmen, Türrahmen, Türflügel, ein Wandelement oder Dachelement selbst. Das System kann in bewegliche wie auch in feste Gebäudeelemente integriert werden.

Das erfindungsgemäße Belüftungssystem lässt sich z. B. ausgezeichnet in Wohncontainer integrieren. Insofern umfasst der Begriff "Gebäudeelement" auch Elemente von Wohncontainern, Wohnwagen etc.

Zumindest in den Bereichen, in denen die Luft zwischen den inneren und äußeren Ent- beziehungsweise Belüftungsöffnungen strömt, sollte das Gebäudeelement einen ausreichenden Hohlraum aufweisen, um den Luftstrom zu gewährleisten. Hierzu können die Wärmetauscher auch wendelförmig gestaltet sein, so dass der Luftstrom innerhalb der Wendel erfolgen kann.

Die Belüftungs- beziehungsweise Entlüftungsöffnungen können eine beliebige geeignete Form aufweisen. Sie können auch aus einem luftdurchlässigen Material gebildet werden. Beispiele für geeignete Formen sind runde oder eckige Öffnungen, schlitzförmige Öffnungen etc.

Die Anzahl der inneren und äußeren Entlüftungsöffnungen 4, 5 beziehungsweise der inneren oder äußeren Belüftungsöffnungen 6, 7 kann je nach Bedarf gewählt werden.

Sie kann sich an der Länge des Wärmeaustauschers im ersten beziehungsweise zweiten Bereich orientieren.

Vorzugsweise wird die Anzahl so gewählt, dass der Bereich mit den inneren Öffnungen nicht mit dem Bereich mit den äußeren Öffnungen überlappt.

In dem oberen Randteil sind innere Entlüftungsöffnungen 4 angeordnet, durch die die Raumluft aus dem Raum heraus in das Innere des Randes geleitet wird. Weiter sind äußere Entlüftungsöffnungen 5 vorgesehen, durch die die Raumluft aus dem Randinnern in die Umgebung ausgeleitet wird.

Die inneren Entlüftungsöffnungen 4 und die äußeren Entlüftungsöffnungen 5 sind jeweils entlang des Wärmeaustauscherelements 1 angeordnet, wobei die äußeren Entlüftungsöffnungen 5 stromabwärts zu den inneren Entlüftungsöffnungen 4 liegen.

Die Luft umströmt den Wärmetauscher im Rand entgegen der Fließrichtung des Wärmeaustauschermediums.

Dabei gibt die in den Rand eintretende warme Raumluft Wärme an das Wärmeübertragungsmedium ab und verlässt den Rand über die äußeren Entlüftungsöffnungen 5. Das erwärmte Wärmeaustauschermedium wird dem zweiten Bereich 3 zugeführt.

Wie im ersten Bereich 2 sind im zweiten Bereich 3 innere Belüftungsöffnungen 6 und äußere Belüftungsöffnungen 7 vorgesehen.

Wie im ersten Bereich 2 sind die inneren Belüftungsöffnungen 6 und äußeren Belüftungsöffnungen 7 entlang des Wärmeaustauscherelements angeordnet, wobei sich die äußeren Belüftungsöffnungen 7 stromaufwärts zu den inneren Belüftungsöffnungen 6 befinden.

Kalte Außenluft dringt durch die äußeren Belüftungsöffnungen 7 in das Randinnere ein und strömt entgegen der Fließrichtung des Wärmeaustauschermediums zu den inneren Belüftungsöffnungen 6, wo die erwärmte Außenluft aus dem Rand in den Raum hineinströmt.

Durch die Anordnung der Entlüftungsöffnungen 4, 5 im oberen Randteil und der Belüftungsöffnungen 6, 7 im unteren Randteil macht sich die vorliegende Erfindung zur Nutze, dass warme Luft nach oben strömt, sodass in einem geschlossenen Raum üblicherweise die Luft im Bereich der Decke, beziehungsweise der Oberkante des Fensters eine höhere Temperatur aufweist als im unteren Bereich des Fensters oder Raumes. Diese Temperaturdifferenz wird bei dieser Anordnung ausgenutzt.

Zumindest die äußeren Ent- und Belüftungsöffnungen können nach außen mit einem Sieb versehen sein, um zum Beispiel das Eindringen von Insekten zu verhindern und das gegebenenfalls als Schallschutz wirken kann.

Der Umlauf des Wärmeübertragungsmediums kann durch die natürliche Konvektion, beziehungsweise Wärmeausdehnung, bewirkt werden.

Bei Bedarf oder unterstützend können zum Beispiel elektrische Pumpelemente vorgesehen werden. Der Betrieb der elektrischen Pumpelemente kann über einen Stromanschluss erfolgen.

Gemäß einer bevorzugten Ausführungsform können die elektrischen Pumpelemente über Solarzellen betrieben werden, die Außen am Gebäude, zum Beispiel auch am Fensterrahmen oder im Bereich des Fensterrahmens, montiert sein können. Gemäß einer weiteren Ausführungsform kann der Antrieb der Pumpelemente auch durch den Luftstrom im System erfolgen.

Gemäß einer Ausführungsform können ein oder mehrere Rückschlagventile 8, 9 vorgesehen sein. Die Rückschlagventile 8, 9 unterstützen die Fließbewegung des Wärmeübertragungsmediums, die sich aufgrund der mit der Erwärmung und Abkühlung des Wärmeübertragungsmediums verbundenen Druckdifferenz ergibt.

In der in der Figur gezeigten Ausführungsform ist ein unteres Rückschlagventil 8 in dem Wärmeaustauscherelement 1 unmittelbar vor Eintritt der Wärmeübertragungsflüssigkeit in den unteren Bereich 3 sowie ein oberes Rückschlagventil 9 unmittelbar vor Eintritt der Wärmeübertragungsflüssigkeit in den oberen Bereich 2 vorgesehen.

Vorzugsweise ist das Wärmeaustauscherelement 1 zumindest in dem Bereich, der zwischen den inneren Entlüftungsöffnungen 4 und den inneren Belüftungsöffnungen 6 liegt, wärmeisoliert, um eine vorzeitige Abkühlung des erwärmten Wärmeübertragungsmediums zu verhindern.

Auch der Bereich des Wärmeaustauscherelements 1 zwischen äußeren Belüftungsöffnungen 7 und äußeren Entlüftungsöffnungen 5 kann Wärme isoliert sein.

Der Wärmeaustauscherkreis kann zur Unterstützung der Erwärmung mit einem oder mehreren Sonnenkollektoren verbunden sein.

Als Wärmeübertragungsmedium kann ein beliebiges bekanntes fluides Wärmeübertragungsmedium eingesetzt werden. Beispiele hierfür sind wasserbasierte Substanzen, ölbasierte Substanzen oder Kühlmittel, wie sie aus der Klimatechnik bekannt sind.

Die Form des ersten und zweiten Wärmeaustauschers unterliegt keiner speziellen Beschränkung. Sie sollte jedoch eine ausreichende Oberfläche aufweisen, um eine effiziente Wärmeübertragung zu gewährleisten.

Der Wärmeaustauscher kann zum Beispiel schlangenlinienförmig verlaufen, oder als Wendel ausgebildet sein.

Er kann oberflächenvergrößernde Elemente aufweisen, wie Lamellen oder Stifte, die aus einem Material gefertigt sein sollten, das eine gute Wärmeleitfähigkeit aufweist, zum Beispiel einem Metall oder Metalllegierung.

### Bezugszeichenliste

- 1: Wärmeaustauscherelement
- 2: erster Bereich
- 3: zweiter Bereich
- 4: innere Entlüftungsöffnungen
- 5: äußere Entlüftungsöffnungen
- 6: innere Belüftungsöffnungen
- 7: äußere Belüftungsöffnungen
- 8: erstes Rückschlagventil
- 9: zweites Rückschlagventil

- a: Fließrichtung des Wärmeübertragungsmediums
- b: Fließrichtung der Luft

## Patentansprüche

1. Belüftungssystem für Räume oder Gebäude, wobei das Belüftungssystem in ein Gebäudeelement integrierbar ist und das Belüftungssystem ein Wärmeaustauscherelement (1) aufweist, das einen ersten Bereich (2) mit einem ersten Wärmeaustauscher und einen zweiten Bereich (3) mit einem zweiten Wärmeaustauscher aufweist, und der erste und zweite Wärmeaustauscher über Rohrleitungen unter Ausbildung eines Wärmeaustauscherkreislaufes miteinander verbunden sind,
wobei im ersten Bereich (2) innere Entlüftungsöffnungen (4), die den ersten Bereich (2) mit dem Rauminneren verbinden, und äußere Entlüftungsöffnungen (5), die den ersten Bereich (2) mit der Außenumgebung verbinden, vorgesehen sind, wobei die inneren Entlüftungsöffnungen (4) stromaufwärts zur Fließrichtung eines Wärmeübertragungsmediums in dem Wärmeaustauscherelement (1) zu den äußeren Entlüftungsöffnungen (5) angeordnet sind, **wobei** zumindest zwischen der ersten inneren Entlüftungsöffnung (4) und der letzten äußeren Entlüftungsöffnung (5) und zwischen der ersten inneren Belüftungsöffnung (6) und der letzten äußeren Belüftungsöffnung (7) jeweils einen Hohlraum in dem Gebäudeelement vorgesehen ist, der einen Luftstrom ermöglicht
**dadurch gekennzeichnet, dass** im zweiten Bereich (3) innere Belüftungsöffnungen (6), die den zweiten Bereich (3) mit dem Rauminneren verbinden, und äußere Belüftungsöffnungen (7), die den zweiten Bereich (3) mit der Außenumgebung verbinden, vorgesehen sind, wobei die inneren Belüftungsöffnungen (6) stromabwärts zu Fließrichtung des Wärmeübertragungsmediums zu den äußeren Belüftungsöffnungen (7) angeordnet sind.

2. Belüftungssystem nach Anspruch 1,
**wobei** zumindest die Rohrleitung, die stromaufwärts zu dem ersten Wärmeaustauscher gelegen ist, wärmeisoliert ist.

3. Belüftungssystem nach Anspruch 1 oder 2,
**wobei** stromabwärts zu dem zweiten Wärmeaustauscher ein Rückschlagventil (8) und/oder stromabwärts zu dem ersten Wärmeaustauscher ein zweites Rückschlagventil (9) vorgesehen ist.

4. Belüftungssystem nach einem der vorhergehenden Ansprüche,
**wobei** die Ent- beziehungsweise Belüftungsöffnungen verschließbar sind.

5. Belüftungssystem nach einem der vorhergehenden Ansprüche,
**wobei** Pumpelemente zur Unterstützung des Umlaufs des Wärmeübertragungsmediums vorgesehen sind.

6. Belüftungssystem nach Anspruch 5,
**wobei** die Pumpelemente elektrische Pumpelemente sind.

7. Belüftungssystem nach Anspruch 6,
**wobei** die elektrischen Pumpelemente über Solarzellen betrieben werden.

8. Belüftungssystem nach einem der vorhergehenden Ansprüche,
**wobei** das Gebäudeelement ein Fensterflügel, Fensterrahmen, Türflügel, Türrahmen, Wand- oder Dachelement ist.

9. Belüftungssystem nach einem der vorhergehenden Ansprüche,
**wobei** der erste Bereich in einen oberen Teil und der zweite Bereich in dem unteren Teil des Gebäudeelements untergebracht ist.

10. Belüftungssystem nach einem der vorhergehenden Ansprüche,
**wobei** zumindest die äußeren Entlüftungsöffnungen (5) und äußeren Belüftungsöffnungen (7) nach Außen mit einem Sieb verschlossen sind.

## Claims

1. A ventilation system for rooms or buildings, in which the ventilation system can be integrated into a building element and the ventilation system has a heat exchanger element (1) that has a first region (2) having a first heat exchanger and a second region (3) having a second heat exchanger, and the first and second heat exchangers are joined together via pipelines, with the formation of a heat exchanger circuit,
**wherein** inner vent openings (4) that connect the first region (2) with the inside of the room, and outer vent openings (5) that connect the first region (2) with the outside environment are provided in the first region, the inner vent openings (4) being disposed upstream to the outer vent openings (5) relative to the flow direction of a heat transfer medium in the heat exchanger element (1),
**wherein** a hollow space that makes possible an air flow is provided in the building element at least between the first inner vent opening (4) and the last outer vent opening (5) as well as between the first inner aeration opening (6) and the last outer aeration opening (7),
**characterized in, that** inner aeration openings (6) that connect the second region (3) with the inside of the room and outer aeration openings (7) that connect the second region (3) with the external environment are provided in the second region (3),
the inner aeration openings (6) being disposed downstream to the outer aeration openings (7) relative to the flow direction of the heat transfer medium.

2. The ventilation system according to claim 1,
**wherein** at least the pipeline that is found upstream to the first heat exchanger is heat-insulated.

3. The ventilation system according to claim 1 or 2,
**wherein** a check valve (8) is provided downstream to the second heat exchanger and/or a second check valve (9) is provided downstream to the first heat exchanger.

4. The ventilation system according to one of the preceding claims,
**wherein** the vent openings and the aeration openings, respectively, can be closed.

5. The ventilation system according to one of the preceding claims,
**wherein** pumping elements are provided for supporting the circulation of the heat transfer medium.

6. The ventilation system according to claim 5,
**wherein** the pumping elements are electrical pumping elements.

7. The ventilation system according to claim 6,
**wherein** the electrical pumping elements are driven by means of solar cells.

8. The ventilation system according to one of the preceding claims,
**wherein** the building element is a window casement, a window frame, a door panel, a door frame, or a wall or roofing element.

9. The ventilation system according to one of the preceding claims,
**wherein** the first region is accommodated in the upper part and the second region in the lower part of the building element.

10. The ventilation system according to one of the preceding claims,
**wherein** at least the outer vent openings (5) and the outer aeration openings (7) are closed toward the outside by means of a screen.

## Revendications

1. Système de ventilation destiné à des locaux ou à des bâtiments, le système de ventilation pouvant être intégré dans un élément de bâtiment, et ledit système de ventilation comportant un élément (1) d'échange thermique qui est doté d'une première région (2) présentant un premier échangeur de chaleur, et d'une seconde région (3) présentant un second échangeur de chaleur, lesdits premier et second échangeurs de chaleur étant reliés l'un à l'autre par des conduits tubulaires, en formant un circuit d'échange thermique,
ladite première région (2) comportant des orifices intérieurs d'évent (4), qui relient ladite première région (2) à l'espace intérieur du local, et des orifices extérieurs d'évent (5) qui relient ladite première région (2) à l'atmosphère extérieure, lesdits orifices intérieurs d'évent (4) étant disposés, par rapport auxdits orifices extérieurs d'évent (5), en amont dans la direction de circulation d'un fluide de transfert de chaleur dans l'élément (1) d'échange thermique, sachant qu'une cavité autorisant un écoulement d'air est au moins respectivement prévue, dans l'élément de bâtiment, entre le premier orifice intérieur d'évent (4) et le dernier orifice extérieur d'évent (5), et entre le premier orifice intérieur de ventilation (6) et le dernier orifice extérieur de ventilation (7),
**caractérisé par** la présence, dans la seconde région (3), d'orifices intérieurs de ventilation (6) qui relient ladite seconde région (3) à l'espace intérieur du local, et d'orifices extérieurs de ventilation (7) qui relient ladite seconde région (3) à l'atmosphère extérieure, lesdits orifices intérieurs de ventilation (6) étant disposés, par rapport auxdits orifices extérieurs de ventilation (7), en aval dans la direction de circulation du fluide de transfert de chaleur.

2. Système de ventilation selon la revendication 1,
dans lequel au moins le conduit tubulaire, situé en amont par rapport au premier échangeur de chaleur, est isolé thermiquement.

3. Système de ventilation selon la revendication 1 ou 2,
dans lequel un clapet antiretour (8) est prévu en aval par rapport au second échangeur de chaleur, et/ou un second clapet antiretour (9) est prévu en aval par rapport au premier échangeur de chaleur.

4. Système de ventilation selon l'une des revendications précédentes,
dans lequel les orifices respectifs d'évent, et de ventilation, se prêtent à une obturation.

5. Système de ventilation selon l'une des revendications précédentes,
dans lequel des éléments de pompage sont prévus pour amplifier la mise en circulation du fluide de transfert de chaleur.

6. Système de ventilation selon la revendication 5,
dans lequel les éléments de pompage sont des éléments électriques de pompage.

7. Système de ventilation selon la revendication 6,
dans lequel les éléments électriques de pompage sont actionnés par l'intermédiaire de cellules solaires.

8. Système de ventilation selon l'une des revendications précédentes,
dans lequel l'élément de bâtiment est un battant de fenêtre, un encadrement de fenêtre, un battant de porte, un encadrement de porte, un élément de cloisonnement ou de toiture.

9. Système de ventilation selon l'une des revendications précédentes,
dans lequel la première région et la seconde région sont ménagées, respectivement, dans une partie supérieure et dans la partie inférieure de l'élément de bâtiment.

10. Système de ventilation selon l'une des revendications précédentes,
dans lequel au moins les orifices extérieurs d'évent (5), et les orifices extérieurs de ventilation (7), sont obturés vers l'extérieur par un tamis.
